# EUROPEAN PATENT SPECIFICATION

(11) **EP 4 506 610 B1**
(45) Date of publication and mention of the grant of the patent: **18.02.2026**
(21) Application number: 23190743.7
(22) Date of filing: 10.08.2023
(51) Int. Cl.: F16N 7/38, F16N 21/00, F16L 57/06

(54) **LUBRICATING DEVICE AND A METHOD FOR APPLYING LUBRICANT**
SCHMIERVORRICHTUNG UND VERFAHREN ZUM AUFBRINGEN VON SCHMIERMITTEL
DISPOSITIF DE LUBRIFICATION ET PROCÉDÉ D'APPLICATION DE LUBRIFIANT

(43) Date of publication of application: 12.02.2025
(73) Proprietor: Bayerische Motoren Werke Aktiengesellschaft, 80809 München (DE)
(72) Inventor: Neotia, Tanay, Prospect, 40059 (US)

(56) References cited:
- CN-U- 210 890 525
- CN-U- 212 052 085
- CN-U- 217 684 339
- US-A- 3 783 972
- US-A- 5 632 356

## Description

The present invention relates to the field of assembly processes. More specifically, the present invention relates to an assembly process for a motor vehicle product, especially a lubricating device for applying lubricant to a hose. Furthermore, the present invention relates to a method for applying lubricant to a hose.

For the production of an engine of a motor vehicle it is necessary to lubricate hoses used for the engine. With lubricating the hoses, they can fit properly so that for example they do not disconnect upon start-up of the engine, which is classified as a high-risk problem because parts of the engine may be destroyed.

As of now, hoses are lubricated by using a spray bottle. This process is not precisely traceable or accountable, though. To avoid for example disconnecting of hoses, as mentioned, it should be possible to make sure that all hoses on the engine line are lubricated correctly.

US 3 783 972 A shows a wire lubricating device for lubricating a cable to facilitate sliding the cable through a conduit.

The disadvantages of the prior art are for example that it is not very industrialized and it could not be used for outer diameter lubrication. It has a low-capacity liquid container, so it requires frequent refilling. Furthermore, it requires a table mount.

It is an object of the present invention to provide a lubricating device and a method for applying lubricant to a hose, which provides a simple method to lubricate hoses on the inner and/or outer diameter in a repeatable and reproducible way.

This object is solved by a lubricating device and a method for applying lubricant to a hose according to the present invention. Advantageous embodiments are presented in the dependent claims, the description, and the drawings.

A first aspect of the present invention relates to a lubricating device for applying lubricant to a hose. The lubricating device comprises a housing with a faceplate and a wall and at least one nozzle being arranged between these two, the faceplate and the wall which are in particular essentially parallel to one another. Through the at least one nozzle lubricant is capable of being dispensed into a dispensing area or lubricating area, and the faceplate having an opening, through which the hose is insertable into the dispensing area, wherein the hose is capable of being positioned by a guidance element during insertion into the dispensing area for applying the lubricant. Furthermore, the lubricating device comprises a pump unit or a pump, which is designed to convey the lubricant from a reservoir, in particular a tank and/or a supply connection, via the at least one nozzle into the dispensing area and the hose placed in the dispensing area, wherein the guidance element and/or at least a partial region of the wall are designed to be pressure-sensitive so that the pump unit is capable of being activated when pressure is applied to the guidance element and/or the partial region.

In other words, a lubricating machine is presented, which uses a pump and hose system, which interconnects the reservoir or tank with the nozzle, to spray lubricant from a main container or reservoir through a nozzle. This lubricates for example the rubber O-ring on the inside of hoses.

The lubricating machine may be used to lubricate hoses before installation. A user puts the hose into the front plate or through the faceplate into the wall of the machine which activates the pump to spray the lubricant inside the hose or on the outside of the hose depending on application. This process can take less than a second, for example only 0.5 seconds. The guidance element may be formed via the opening or may be an extra element, in particular at the wall and corresponding to the opening.

The machine may be used to lubricate a coolant tube adapter pipe hose. An associate brings the hose to the machine and presses against the plate. The machine will spray a soap or water mixture onto the inside O-ring of the coolant hose to ensure it fits on the engine connection correctly. Once the spray application is complete, the machine may communicate via BVIS to communicate that the hose lubrication was successful.

At least one sensor device could be arranged at the lubricant device so that for example in the background the lubricant device or machine may measure a battery charge, if it is battery-operated, a level of lubricant in the reservoir, and may notify the associate via lights and sound when one of the levels is low. The lubricating device according to the invention may also be used to lubricate a variety of different objects, not just hoses. For example, bump stops on a door line could be lubricated via the lubricating device.

It is an advantage of the present invention that lubricating a large number of hoses, for example in a production process, each is lubricated exactly in the same way. As a result the reproducibility is high. Therefore, the quality of the process is also high.

According to the invention the guidance element and/or at least a partial region of the wall are designed to be pressure-sensitive so that the pump unit is capable of being activated when pressure is applied to the guidance element and/or the partial region. In other words, by inserting the hose into the dispensing area, and touching the wall, or moving the guidance element, the pump unit may be activated so that there is at least a spray of lubricant from the at least one nozzle. The guidance element and/or the wall may act as a switch for activating the pump. An advantage is that the user does not need to activate the lubricating process for example via an extra switch with his second arm. This means the lubrication process may be activated automatically when the hose is placed correctly in the dispensing area.

In another embodiment of the present invention, the at least one nozzle is arranged and/or has a shape such that the dispensing area is orientated or formed such that lubricant is applicable to an inside of the positioned hose and/or an outside of the positioned hose. In other words, the lubricating machine may be used to lubricate an inner side and/or an outer side of the hose, independently of how the nozzle is arranged or how the nozzle passing and leaving lubricant is formed or injected into the dispensing area. So the lubricating device could be advantageously used for both cases, lubricating the hose on its inside or outside without needing to switch to another device.

At least two nozzles are presented and the supply of the lubricant at the at least two nozzles is controllable via a switch so that the at least one first nozzle of the at least two nozzles defines the dispensing area for application to the inside of the hose and the at least one second nozzle of the at least two nozzles defines a second dispensing area for application to the outside of the hose. In other words, the position of the hose is switchable between the at least first nozzle and the at least one second nozzle, which for example could be placed in such a way that the opening or inlet in the faceplate is for the at least first nozzle and another inlet or opening in the faceplate is for the at least one second nozzle. This means that the two dispensing areas are formed and via switching it is decided which dispensing area is used when activating the pump unit. An advantage of this approach is that it may be easily decided to lubricate either the inside or outside of the hose according to its intended use.

In still another embodiment of the present invention a battery is provided for supplying power to the pump unit so that the pump unit is operable independently of a power network, and the battery is arranged on or in the housing. In other words, an in particular, rechargeable battery and/or exchangeable battery is provided for operating the lubricating machine of the grid. An advantage is that the lubricating machine may be used in a portable manner and may be placed at a destination where it is needed, without the need of a connection to a power network.

In yet another embodiment of the present invention at least one display element, in particular a light bulb or display, and/or an acoustic element, in particular a speaker, are present which should output a filling level of the reservoir and/or a filling level of the battery. In other words, the lubricating device may comprise status lights for machine operation and liquid filling level, and a speaker may also be provided with an, in particular annoying, sound that is emitted when filling levels are very low.

In still another embodiment of the present invention, the housing of the lubricating device is mounted on a frame which has a mounting for the reservoir. In other words, the lubricating device comprises a frame so that it could be placed in such a way that the dispensing area is placed in a preferable location for the user. And the reservoir, in particular a tank, may be placed in the frame so that the housing for example can be very compact. This has the advantage that the lubricating device may be built with a compact design with a relatively large reservoir and the dispensing area may be placed as needed.

In another embodiment of the present invention the mounting for the reservoir is capable of being displaced so that the reservoir may be moved between a pumping position and a removal position. In other words, the reservoir is for example placed on a sliding platform within the frame of the lubricating device. This means that the reservoir may be moved by sliding between the pumping position, which is the position when the lubricating device is used for lubricating hoses, and the removal position for refilling the reservoir or tank or taking it out for replacing it by another one. An advantage of this is that the reservoir is easily refilled or exchanged.

In still another embodiment of the present invention the faceplate or at least a panel of the faceplate comprising the opening is exchangeable so that a diameter of the opening is adaptable to a diameter of the hose and/or the frame is decided to be adjustable in height. In other words, for lubricating different hoses of different diameters the opening of the faceplate could be changed accordingly by exchanging the faceplate or its panel. In addition or alternatively, the frame's height is adjustable so that it could easily be used by workers who differ in height. An advantage is that the lubricating device may be used in a very versatile manner.

In still another embodiment of the present invention the interface for data exchange with an external control device, for example via a bus system for control, is provided. In other words, the lubricating device has at least a communication device and/or an electronic unit such as a microcontroller (MCU), which is for example used for controlling a display element or the acoustic element and which may for example transmit a state of the lubricating device via the interface to an external control device for example an electronic control unit. Therefore, the process of applying lubricant via the lubricating device can be controlled or supervised.

A second aspect of the present invention relates to a method for applying lubricant to a hose with a lubricating device, comprising a housing with a faceplate and a wall and at least one nozzle disposed between the faceplate and the wall, through which lubricant is dispensed into a dispensing area when the hose is inserted into the dispensing area through an opening in the faceplate, wherein the hose is positioned for application via a guidance element, which could be for example a power of the nozzle itself, upon insertion into the dispensing area, and a pump unit delivers or conveys the lubricant from a reservoir via the at least one nozzle into the dispensing area and therefore onto the hose, wherein the guidance element and/or at least a partial region of the wall are designed to be pressure-sensitive so that the pump unit is capable of being activated when pressure is applied to the guidance element and/or the partial region.

Advantageous embodiments and advantages of the first aspect of the invention are to be regarded as advantageous embodiments and advantages of the second aspect of the invention and vice versa.

Further features of the invention result from the claims, the figures and the figure description. The features and combinations of features mentioned above in the description, as well as the features and combinations of features mentioned below in the figure description and/or shown alone in the figures, can be used not only in the combination indicated in each case, but also in other combinations or on their own.

The invention will now be explained in more detail with reference to a preferred embodiment and with reference to the drawings.

The drawings show in:
- Fig. 1: perspective view of a lubricating device for applying lubricant to a hose;
- Fig. 2: side view of the lubricating device as shown in Fig. 1;
- Fig. 3: perspective front view of a housing of the lubricating device;
- Fig. 4: schematic side view of the housing of the lubricating device; and
- Fig. 5: another schematic side view of the housing of the lubricating device.

In the figures, identical reference signs are used for the same components.

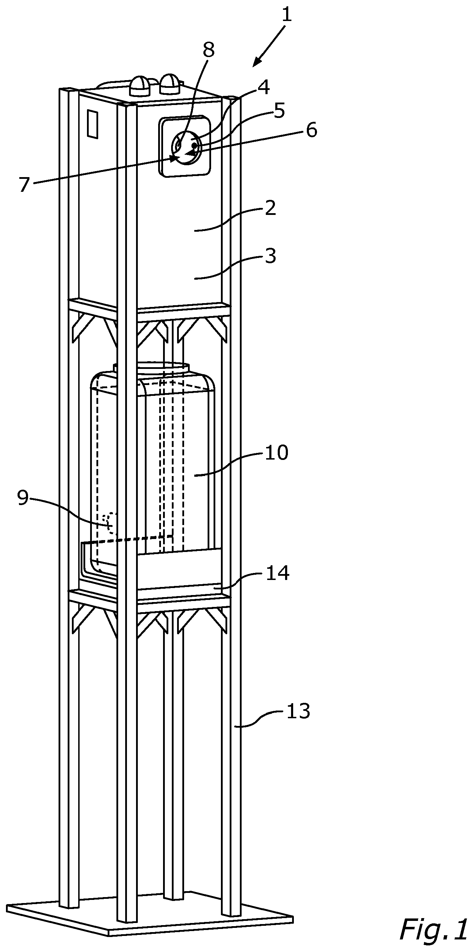

Fig. 1 showing a perspective view of a lubricating device 1 for applying lubricant to a hose. The lubricating device 1 comprises a housing 2 with a faceplate 3 and a wall 4 and at least one nozzle 5 being arranged between these two, the faceplate 3, and the wall 4. Through the at least one nozzle 5 lubricant is dispensable into a dispensing area 6 or dispensing zone. The faceplate 3 has an opening 7 or inlet through which the hose is insertable into the dispensing area 6 wherein the hose is positionable via a guidance element 8 or by means of the guidance element 8 during insertion into the dispensing area 6 for application or applying the lubricant. The lubricating device 1 further comprises a pump unit 9 in particular a pump, which is designed to convey the lubricant from a reservoir 10, in this example a tank, via a supply connection 11 and the at least one nozzle 5 into the dispensing area 6 or zone and therefore onto the part of the hose which needs to be lubricated.

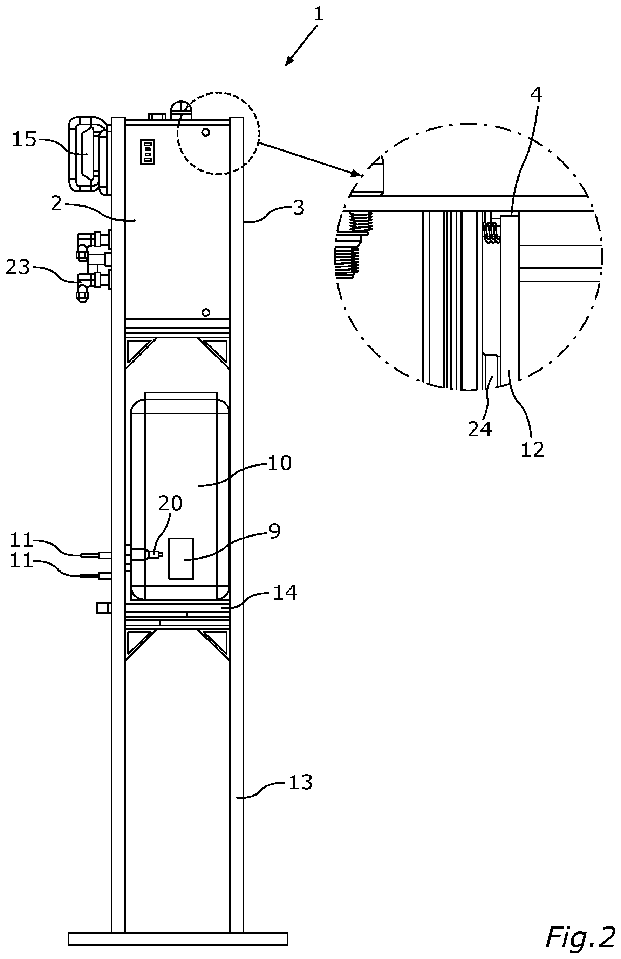

A mechanism for activating the pump unit 9 so that at least a spray of lubricant is dispensed from the at least one nozzle 5 is shown in Fig. 2. Fig. 2 shows a side view of the lubricant device according to Fig. 1 where at least a partial region 12 of the wall 4 is designed to be pressure-sensitive so that the pump unit 9 is capable of being activated. The pressure-sensitiveness may be provided by a switch 24, which is positioned in line behind the wall 4 in the direction of inserting the hose so that the switch 24 is activated when pressure is exerted upon the partial region 12 or the wall 4. The switch 24 is in particular a micro switch. A pivot point for the wall or associated swivel plate can be provided to activate the micro switch by a minimal movement of the plate. A spring force of the micro switch can be low for easy handling.

The guidance element 8 may be provided or formed by the opening 7 or may be an extra element at the wall 4. The guidance element 8 is used to place the hose in such a way into the dispensing area 6 that the spray of lubricant applied by the nozzle 5 reaches the part of the hose which should be lubricated. Therefore, a defined lubrication of the hose may be provided.

Alternatively to the activation of the pump unit 9, via the switch 24 (shown in the zoomed part of the Fig. 2), the guidance element 8 may be pressure-sensitive and used for activation of the pump unit 9. The pump unit 9 is in particular a pump in the reservoir 10 or tank.

It is shown in Fig. 1 and 2 that the housing 2 is mounted onto a frame 13 which has a mounting 14 for the reservoir 10 or tank. The mounting 14 of the reservoir 10 is capable of being displaced or moved so that the reservoir is may be moved between a shown pumping position and a removal position. In other words, the mounting 14may comprise for example a slide or rail system so that in the removal position the reservoir 10 may easily refilled or exchanged, wherein a refilled jug may be provided.

The pump unit 9 is in particular a submersible pump inside the reservoir 10. The reservoir 10 may for example be provided with space for one gallon of lubricant. The connection of the housing 2 with the frame 13 or stand may be provided for example by four screws so that the housing 2 may easily be disconnected from the frame 13 or stand. The stand or frame 13 may be designed to be adjustable in height for easy operation or configuration of the lubricant device 1 as needed by a worker.

As shown in Fig. 2, a battery 15 could be provided by which the pump unit 9 is capable of being operated independently of the grid wherein the battery 15 is arranged on a second wall of the housing 2. It could also be arranged inside the housing 2.

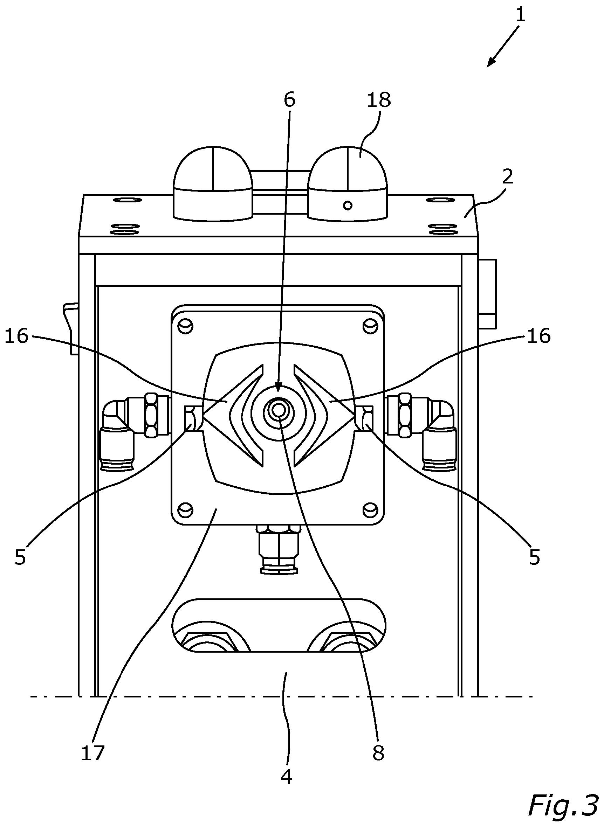

Fig. 3 shows a partial view of the housing 2 of the lubricating device 1 where the at least one nozzle 5 is shown as two nozzles for lubrication of the outer diameter of the hose. This means that a nozzle 5 for outside or outer diameter lubrication is shown wherein a spray area 16 is indicated which forms the dispensing area 6.

Fig. 3 shows the housing without the faceplate 3 but with a holder 17 for the in particular exchangeable faceplate 3.

As shown in Fig. 3, the at least one nozzle 5 is arranged and/or has a shape so that the dispensing area 6 is orientated or formed in particular by the spray areas 17 so that lubricant is capable of being applied to an inside or an outside of the position hose.

In an embodiment which is not shown here at least two nozzles 5 may be presented and the supply of the lubricant at the at least two nozzles is controllable by a switch so that the at least one first nozzle 5 of the at least two nozzles 5 defines the dispensing area 6 for application to the inside of the hose and the at least one second nozzle of the at least two nozzles 5 defines a second dispensing area for application to the outside of the hose.

Further shown in Fig. 3 is a control unit 22 within a box in the housing 2. The control unit could provide an interface for data exchange with an external control device, which is in particular an interface configured as a BVIS. Electric connectors 23 are provided for forming the interface between the external control unit and the control unit 22.

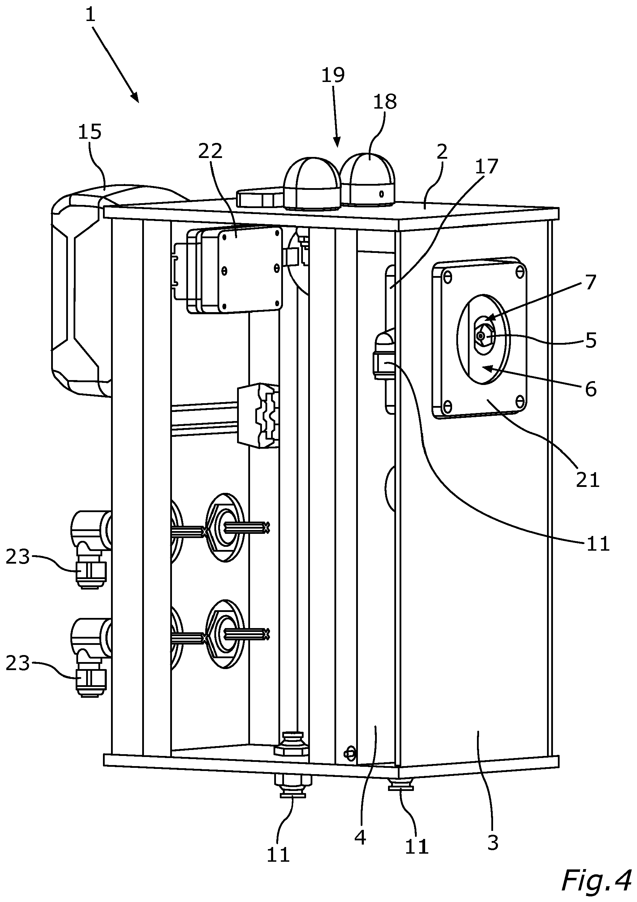

Fig. 4 shows the at least one display element 18 and an acoustic element 19, for example a speaker, by which, in particular, a filling level of the reservoir 10, which is captured by a level sensor 20 in the reservoir 10, and a battery charging level of the battery 15 may be displayed or shown. The display element 18 may be configured more or less as a light bulb or a LED and/or also as a battery level indicator.

Fig. 4 further shows another schematic side view of the housing 2. The possibility of an interchangeable panel 21 which is part of the faceplate and could be fixed to the holder 17, wherein the panel 21 defines the diameter of the opening 7 of the faceplate 3. The panel 21 may built the guidance element 8, and is adaptable to a diameter of the hose which should be lubricated.

What is not shown in the figures are hoses (to be distinguished from the hoses to be lubricated) or pipes for connecting the reservoir 10 with supply connections 11 and the nozzles 5. Because of the modular setup of the lubricating device 1 these connecting pipes may easily be provided and adaptions may be easily made. All pipes need to connect the at least one nozzle 5 with the supply connections 11 and/or the tank may be hidden inside the housing 2.

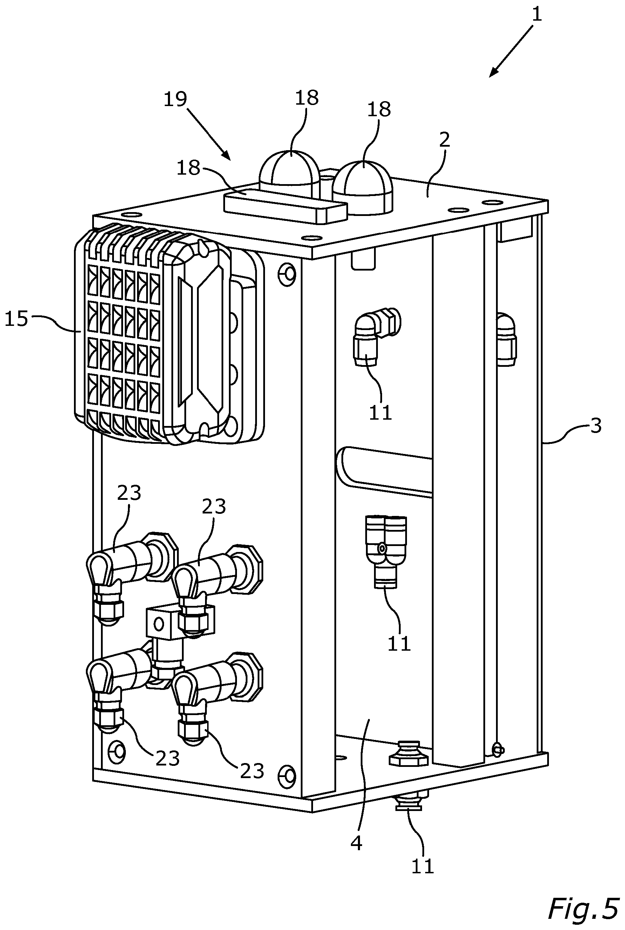

The connectors 23 may send data to the BVIS and/or receive data from the BVIS. The lubricating device 1 or spray unit is shown in Fig. 5 from a schematic back view where the placement of the connectors 23 is shown.

With the spray unit or lubricating device 1 shown in the figures a method for lubricating hoses could be provided. Within the method a hose is inserted into the dispensing area 6 through the openings 7 of the faceplate and wherein the positioning is performed via guidance element 8 and upon insertion the pump unit 9 is activated to dispense or spray the lubricant via the at least one nozzle 5.

Instead of the frame 13 the sprayer box or housing 2 of the lubricating machine or lubricating device 1 may be used as stand-alone unit or together with a custom container.

With the lubricating device 1 and the method provided it is easily possible to lubricate a variety and multiple numbers of hoses in a constant and advantageous manner.

### Reference Signs

- 1: lubricating device
- 2: housing
- 3: faceplate
- 4: wall
- 5: nozzle
- 6: dispensing area
- 7: opening
- 8: guidance element
- 9: pump unit
- 10: reservoir
- 11: supply connection
- 12: partial region
- 13: frame
- 14: mounting
- 15: battery
- 16: spray area
- 17: holder
- 18: display element
- 19: acoustic element
- 20: level sensor
- 21: panel
- 22: control unit
- 23: electronic connectors
- 24: switch

## Claims

1. Lubricating device (1) for applying lubricant to a hose, comprising a housing (2) with a faceplate (3) and a wall (4), at least one nozzle (5) being arranged between these two, through which nozzle (5) lubricant is dispensable into a dispensing area (6), and the faceplate (3) having an opening (7), through which the hose is insertable into the dispensing area (6), wherein the hose is positionable via a guidance element (8) during insertion into the dispensing area (6) for application, and with a pump unit (9) which is designed to convey the lubricant from a reservoir (10) via the at least one nozzle (5) into the dispensing area (6)
**characterized in that**
the guidance element (8) and/or at least a partial region (12) of the wall (4) are designed to be pressure-sensitive so that the pump unit (9) is capable of being activated when pressure is applied to the guidance element (8) and/or the partial region (12).

2. Lubricating device (1) according to claim 1 or 2,
**characterized in that**
the at least one nozzle (5) is arranged and/or has a shape such that the dispensing area (6) is formed such that lubricant is applicable to an inside and/or an outside of the positioned hose.

3. Lubricating device (1) according to any one of the preceding claims,
**characterized in that**
at least two nozzles (5) are present and the delivery of the lubricant at the at least two nozzles (5) is controllable via a switch so that the at least one first nozzle (5) of the at least two nozzles (5) defines the dispensing area for application to the inside of the hose and the at least one second nozzle (5) of the at least two nozzles (5) defines a second dispensing (6) area for application to the outside of the hose.

4. Lubricating device (1) according to any one of the preceding claims,
**characterized in that**
a battery (15) is provided, for providing power to the pump unit (9), and the battery (15) is arranged on or in the housing.

5. Lubricating device (1) according to any one of the preceding claims,
**characterized in that**
at least one display element (18) and/or one acoustic element (19) are present, by means of which, in particular, a filling level of the reservoir (filling level sensor) and/or a battery level are outputable.

6. Lubricating device (1) according to any one of the preceding claims,
**characterized in that**
the housing (2) is mounted on a frame (13) which has a mounting (14) for the reservoir (10).

7. Lubricating device (1) according to claim 6,
**characterized in that**
the mounting (14) for the reservoir (10) is displaceably arranged so that the reservoir (10) is capable of being displaced between a pumping position and a removal position.

8. Lubricating device (1) according to any one of the preceding claims,
**characterized in that**
the faceplate (3) or at least a panel (21) of the faceplate (3) comprising the opening (7) is capable of being exchanged so that a diameter of the opening (7) is adaptable to a diameter of the hose, and/or the frame (13) is designed to be adjustable in height.

9. Lubricating device (1) according to any one of the preceding claims,
**characterized in that**
an interface for data exchange with an external control device is provided.

10. A method for applying lubricant to a hose with a lubricating device (1), comprising a housing (2) with a faceplate (3) and a wall (4), and at least one nozzle (5) disposed between the faceplate (3) and the wall (4), through which lubricant is dispensed into a dispensing area (6) when the hose is inserted into the dispensing area through an opening (7) in the faceplate (3), wherein the hose is positioned via a guidance element (8) upon insertion into the dispensing area (6), and a pump unit (9) delivers the lubricant from a reservoir (10) via the at least one nozzle (5) into the dispensing area, wherein the guidance element (8) and/or at least a partial region (12) of the wall (4) are designed to be pressure-sensitive so that the pump unit (9) is capable of being activated when pressure is applied to the guidance element (8) and/or the partial region (12).

## Patentansprüche

1. Schmiervorrichtung (1) zum Aufbringen von Schmiermittel auf einen Schlauch, umfassend ein Gehäuse (2) mit einer Frontplatte (3) und einer Wand (4), wobei zwischen diesen beiden mindestens eine Düse (5) angeordnet ist, durch welche Düse (5) Schmiermittel in einen Ausgabebereich (6) abgebbar ist, und wobei die Frontplatte (3) eine Öffnung (7) aufweist, durch welche der Schlauch in den Ausgabebereich (6) einsetzbar ist, wobei der Schlauch über ein Führungselement (8) während des Einsetzens in den Ausgabebereich (6) zum Aufbringen positionierbar ist, und mit einer Pumpeneinheit (9), die dazu ausgebildet ist, das Schmiermittel aus einem Reservoir (10) über die mindestens eine Düse (5) in den Ausgabebereich (6) zu fördern,
**dadurch gekennzeichnet, dass**
das Führungselement (8) und/oder mindestens ein Teilbereich (12) der Wand (4) druckempfindlich ausgebildet sind, so dass die Pumpeneinheit (9) aktivierbar ist, wenn Druck auf das Führungselement (8) und/oder den Teilbereich (12) ausgeübt wird.

2. Schmiervorrichtung (1) nach Anspruch 1 oder 2,
**dadurch gekennzeichnet, dass**
die mindestens eine Düse (5) angeordnet ist und/oder eine Form aufweist, so dass der Ausgabebereich (6) derart ausgebildet ist, dass Schmiermittel auf eine Innenseite und/oder eine Außenseite des positionierten Schlauchs aufbringbar ist.

3. Schmiervorrichtung (1) nach einem der vorhergehenden Ansprüche,
**dadurch gekennzeichnet, dass**
mindestens zwei Düsen (5) vorhanden sind und die Abgabe des Schmiermittels an den mindestens zwei Düsen (5) über einen Schalter steuerbar ist, so dass die mindestens eine erste Düse (5) der mindestens zwei Düsen (5) den Ausgabebereich zum Aufbringen auf die Innenseite des Schlauchs definiert und die mindestens eine zweite Düse (5) der mindestens zwei Düsen (5) einen zweiten Ausgabebereich (6) zum Aufbringen auf die Außenseite des Schlauchs definiert.

4. Schmiervorrichtung (1) nach einem der vorhergehenden Ansprüche,
**dadurch gekennzeichnet, dass**
eine Batterie (15) vorgesehen ist, zur Bereitstellung von Energie für die Pumpeneinheit (9), und die Batterie (15) an oder in dem Gehäuse angeordnet ist.

5. Schmiervorrichtung (1) nach einem der vorhergehenden Ansprüche,
**dadurch gekennzeichnet, dass**
mindestens ein Anzeigeelement (18) und/oder ein akustisches Element (19) vorhanden sind, mittels welchen insbesondere ein Füllstand des Reservoirs (Füllstandssensor) und/oder ein Batteriestand ausgebbar sind.

6. Schmiervorrichtung (1) nach einem der vorhergehenden Ansprüche,
**dadurch gekennzeichnet, dass**
das Gehäuse (2) an einem Rahmen (13) angebracht ist, welcher eine Halterung (14) für das Reservoir (10) aufweist.

7. Schmiervorrichtung (1) nach Anspruch 6,
**dadurch gekennzeichnet, dass**
die Halterung (14) für das Reservoir (10) verschiebbar angeordnet ist, so dass das Reservoir (10) zwischen einer Pumpposition und einer Entnahmeposition verschiebbar ist.

8. Schmiervorrichtung (1) nach einem der vorhergehenden Ansprüche,
**dadurch gekennzeichnet, dass**
die Frontplatte (3) oder mindestens eine Platte (21) der Frontplatte (3), welche die Öffnung (7) umfasst, austauschbar ist, so dass ein Durchmesser der Öffnung (7) an einen Durchmesser des Schlauchs anpassbar ist, und/oder der Rahmen (13) in der Höhe verstellbar ausgebildet ist.

9. Schmiervorrichtung (1) nach einem der vorhergehenden Ansprüche,
**dadurch gekennzeichnet, dass**
eine Schnittstelle zum Datenaustausch mit einem externen Steuergerät vorgesehen ist.

10. Verfahren zum Aufbringen von Schmiermittel auf einen Schlauch mit einer Schmiervorrichtung (1), umfassend ein Gehäuse (2) mit einer Frontplatte (3) und einer Wand (4), und mindestens eine Düse (5), welche zwischen der Frontplatte (3) und der Wand (4) angeordnet ist, durch welche Schmiermittel in einen Ausgabebereich (6) abgegeben wird, wenn der Schlauch in den Ausgabebereich durch eine Öffnung (7) in der Frontplatte (3) eingesetzt wird, wobei der Schlauch über ein Führungselement (8) beim Einsetzen in den Ausgabebereich (6) positioniert wird, und eine Pumpeneinheit (9) das Schmiermittel aus einem Reservoir (10) über die mindestens eine Düse (5) in den Ausgabebereich fördert, wobei das Führungselement (8) und/oder mindestens ein Teilbereich (12) der Wand (4) druckempfindlich ausgebildet sind, so dass die Pumpeneinheit (9) aktivierbar ist, wenn Druck auf das Führungselement (8) und/oder den Teilbereich (12) ausgeübt wird.

## Revendications

1. Dispositif de lubrification (1) pour appliquer du lubrifiant sur un tuyau, comprenant un boîtier (2) avec une plaque frontale (3) et une paroi (4), au moins une buse (5) étant disposée entre ces deux, à travers laquelle buse (5) du lubrifiant est distribuable dans une zone de distribution (6), et la plaque frontale (3) présentant une ouverture (7), à travers laquelle le tuyau est insérable dans la zone de distribution (6), dans lequel le tuyau est positionnable via un élément de guidage (8) lors de l'insertion dans la zone de distribution (6) pour l'application, et avec une unité de pompe (9) qui est conçue pour transporter le lubrifiant d'un réservoir (10) via l'au moins une buse (5) dans la zone de distribution (6),
**caractérisé en ce que**
l'élément de guidage (8) et/ou au moins une région partielle (12) de la paroi (4) sont conçus pour être sensibles à la pression de sorte que l'unité de pompe (9) est capable d'être activée lorsque de la pression est appliquée sur l'élément de guidage (8) et/ou la région partielle (12).

2. Dispositif de lubrification (1) selon la revendication 1 ou 2,
**caractérisé en ce que**
l'au moins une buse (5) est disposée et/ou présente une forme telle que la zone de distribution (6) est formée de telle sorte que du lubrifiant est applicable sur un intérieur et/ou un extérieur du tuyau positionné.

3. Dispositif de lubrification (1) selon l'une quelconque des revendications précédentes,
**caractérisé en ce que**
au moins deux buses (5) sont présentes et la distribution du lubrifiant au niveau des au moins deux buses (5) est contrôlable via un interrupteur de sorte que l'au moins une première buse (5) des au moins deux buses (5) définit la zone de distribution pour l'application sur l'intérieur du tuyau et l'au moins une deuxième buse (5) des au moins deux buses (5) définit une deuxième zone de distribution (6) pour l'application sur l'extérieur du tuyau.

4. Dispositif de lubrification (1) selon l'une quelconque des revendications précédentes,
**caractérisé en ce que**
une batterie (15) est prévue, pour fournir de l'énergie à l'unité de pompe (9), et la batterie (15) est disposée sur ou dans le boîtier.

5. Dispositif de lubrification (1) selon l'une quelconque des revendications précédentes,
**caractérisé en ce que**
au moins un élément d'affichage (18) et/ou un élément acoustique (19) sont présents, au moyen desquels, en particulier, un niveau de remplissage du réservoir (capteur de niveau de remplissage) et/ou un niveau de batterie sont délivrables.

6. Dispositif de lubrification (1) selon l'une quelconque des revendications précédentes,
**caractérisé en ce que**
le boîtier (2) est monté sur un châssis (13) qui présente un support (14) pour le réservoir (10).

7. Dispositif de lubrification (1) selon la revendication 6,
**caractérisé en ce que**
le support (14) pour le réservoir (10) est disposé de manière déplaçable de sorte que le réservoir (10) est capable d'être déplacé entre une position de pompage et une position de retrait.

8. Dispositif de lubrification (1) selon l'une quelconque des revendications précédentes,
**caractérisé en ce que**
la plaque frontale (3) ou au moins un panneau (21) de la plaque frontale (3) comprenant l'ouverture (7) est capable d'être échangé de sorte qu'un diamètre de l'ouverture (7) est adaptable à un diamètre du tuyau, et/ou le châssis (13) est conçu pour être réglable en hauteur.

9. Dispositif de lubrification (1) selon l'une quelconque des revendications précédentes,
**caractérisé en ce que**
une interface pour l'échange de données avec un dispositif de commande externe est prévue.

10. Procédé pour appliquer du lubrifiant sur un tuyau avec un dispositif de lubrification (1), comprenant un boîtier (2) avec une plaque frontale (3) et une paroi (4), et au moins une buse (5) disposée entre la plaque frontale (3) et la paroi (4), à travers laquelle du lubrifiant est distribué dans une zone de distribution (6) lorsque le tuyau est inséré dans la zone de distribution à travers une ouverture (7) dans la plaque frontale (3), dans lequel le tuyau est positionné via un élément de guidage (8) lors de l'insertion dans la zone de distribution (6), et une unité de pompe (9) transporte le lubrifiant d'un réservoir (10) via l'au moins une buse (5) dans la zone de distribution, dans lequel l'élément de guidage (8) et/ou au moins une région partielle (12) de la paroi (4) sont conçus pour être sensibles à la pression de sorte que l'unité de pompe (9) est capable d'être activée lorsque de la pression est appliquée sur l'élément de guidage (8) et/ou la région partielle (12).
